# FASCICULE DE BREVET EUROPEEN

(11) **EP 2 651 630 B1**
(45) Date de publication et mention de la délivrance du brevet: **13.05.2015**
(21) Numéro de dépôt: 11811072.5
(22) Date de dépôt: 09.12.2011
(51) Int. Cl.: B29D 30/52, B29C 47/04, B29C 47/52, B29C 43/28, B29C 43/46

(54) **PROCEDE ET INSTALLATION DE FABRICATION D'UNE EBAUCHE DE PNEUMATIQUE AU MOYEN D'UNE NAPPE COMPRENANT DEUX GOMMES ET EBAUCHE CRUE DE PNEUMATIQUE**
VERFAHREN UND VORRICHTUNG ZUR HERSTELLUNG EINES REIFENS UNTER VERWENDUNG EINER LAGE AUS ZWEI KAUTSCHUKZUSAMMENSETZUNGEN
METHOD AND APPARATUS FOR THE PRODUCTION OF A TYRE USING A PLY COMPRISING TWO RUBBER COMPOUNDS

(30) Priorité: 13.12.2010 FR 1060421
(43) Date de publication de la demande: 23.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DENAVIT, Franck, F-63040 Clermont-Ferrand Cedex 9 (FR); BECCAVIN, Christian, F-63040 Clermont-Ferrand Cedex 9 (FR); PETROVICH, Michael, F-63040 Clermont-Ferrand Cedex 9 (FR); MONNEREAU, Patrice, F-63040 Clermont-Ferrand Cedex 9 (FR)
(74) Mandataire: Noel, Luminita
(86) Numéro de dépôt international: PCT/FR2011/052926
(87) Numéro de publication internationale: WO 2012/080629

(56) Documents cités:
- EP-A1- 0 868 991
- WO-A1-99/61230
- DE-A1-102007 039 100
- FR-A1- 2 285 990
- FR-A1- 2 916 383
- US-A- 1 602 746
- US-A- 1 913 330
- US-A- 2 539 690

## Description

L'invention concerne la fabrication des pneumatiques de roue et en particulier la réalisation de l'ébauche crue du pneumatique.

Un pneumatique de roue de véhicule comprend notamment une bande de roulement destinée à être en contact avec le sol lors du déplacement du véhicule. Pour réduire la résistance à l'avancement du pneumatique, il est connu d'ajouter une charge de silice au mélange de gomme formant la bande de roulement. Toutefois, la forte teneur en silice qui s'ensuit dans la bande de roulement la rend particulièrement peu conductrice de l'électricité. Or, le pneumatique a en général aussi pour fonction de mettre le véhicule en contact électrique avec le sol afin d'éviter l'accumulation d'électricité statique à bord.

Dans ces conditions, pour maintenir une liaison électrique entre le véhicule et le sol, il est connu par exemple du document FR-2 775 220 de mettre en place dans la bande de roulement un insert comprenant un mélange de gomme bon conducteur de l'électricité. A cette fin, on réalise la bande de roulement par extrusion du matériau faiblement conducteur de l'électricité et on introduit par coextrusion dans le canal d'extrusion un insert formé d'un mélange conducteur de l'électricité.

On entend fréquemment par matériau caoutchouteux faiblement conducteur de l'électricité un matériau à base de caoutchouc présentant une résistivité supérieure ou égale à 10⁸ Ohm/cm. De même, on entend par matériau caoutchouteux conducteur de l'électricité un matériau à base de caoutchouc présentant une résistivité inférieure à 10⁶ Ohms/cm. L'insert a pour fonction de conduire les charges électriques depuis la partie radialement interne de la bande de roulement jusqu'à la partie radialement externe en contact avec le sol.

Il est également possible de fabriquer la bande de roulement en enroulant en continu des nappes de gomme de largeur variable comme cela est décrit dans la publication WO 2009/131578 de la demanderesse.

Toutefois, ce document ne décrit pas les moyens permettant de disposer un insert dans la bande de roulement.

Un procédé et un dispositif pour la fabrication d'une ébauche crue de pneumatique comprenant deux gommes sont décrits dans le brevet US 1,913,330.

Un but de l'invention est de proposer un procédé et une installation facilement adaptables sur le dispositif tel que décrit dans la publication citée ci-dessus et permettant de réaliser des inserts.

A cet effet, on prévoit, selon l'invention, un procédé de fabrication d'une ébauche crue de pneumatique dans lequel simultanément :
- une calandre forme dans un entrefer situé entre deux rouleaux une nappe comprenant une première gomme, la calandre formant un bourrelet en amont de l'entrefer, et
- on alimente le bourrelet et l'entrefer avec une deuxième gomme présentant une composition différente de celle de la première gomme, de façon à former dans la nappe au moins un insert de la deuxième gomme.

Ainsi, l'alimentation de la matière destinée à former l'insert est réalisée en amont de l'opération de calandrage de la nappe. Étant donné qu'on introduit la deuxième gomme au sein du bourrelet de la première gomme destinée à former la plus grande partie de la nappe, on constate à cet égard que la mise en contact des deux gommes à ce stade, alors que la nappe n'a pas encore sa forme définitive, ne nuit pas à la réalisation de l'insert.

L'invention tire aussi partie du fait que le respect étroit des qualités dimensionnelles de l'insert n'est pas un point critique de la fabrication. C'est pourquoi la matière qui le forme peut être introduite au sein du matériau de la nappe alors que cette dernière n'est pas encore calandrée.

Le procédé a par ailleurs pour avantage de permettre de préserver les qualités dimensionnelles de la nappe. On évite en effet les problèmes posés par la réalisation d'une fente puis d'une insertion dans la nappe après qu'elle a été calandrée.

Avantageusement, l'un des deux rouleaux porte la première gomme en amont de l'entrefer. Il s'agit, en effet, d'une façon particulièrement simple d'amener la matière principale de la nappe jusqu'à l'entrefer et de garantir l'épaisseur de la nappe.

Avantageusement, en amont de l'entrefer, on sépare en deux parties disjointes une couche de la première gomme. Cette séparation facilite le positionnement correct de l'insert dans la nappe et permet à l'insert d'être apparent sur les deux faces de la nappe.

Avantageusement, on réalise l'alimentation de la deuxième gomme par extrusion.

Dans un mode de réalisation, on peut mettre en oeuvre le procédé de sorte que l'insert ou l'un des inserts apparaît sur au moins une face principale de la nappe.

De préférence, l'insert apparaît sur les deux faces principales de la nappe dans une même section de la nappe dans un plan perpendiculaire à une direction longitudinale de la nappe.

Dans un autre mode de réalisation particulier, on peut mettre en oeuvre le procédé de sorte que l'insert ou chaque insert apparaît sur une unique face principale de la nappe.

De préférence, la première gomme présente une résistivité supérieure ou égale à 10⁸ Ohms/cm, et la deuxième gomme une résistivité inférieure ou égale à 10⁶ Ohms/cm.

On prévoit aussi selon l'invention une installation de fabrication d'une ébauche crue de pneumatique, l'installation comprenant :
- une calandre comportant au moins deux rouleaux formant un entrefer,
- des premiers moyens d'alimentation de l'entrefer en gomme, agencés de sorte que l'entrefer forme une nappe de gomme et que la calandre forme un bourrelet en amont de l'entrefer, et
- des deuxièmes moyens d'alimentation de l'entrefer et du bourrelet en gomme, indépendants des premiers moyens et agencés de façon à former au moins un insert dans la nappe.

De préférence, la calandre comprend au moins trois rouleaux, les deux rouleaux formant l'entrefer étant les rouleaux les plus en aval. Ainsi, c'est au dernier stade de mise en forme de la nappe qu'à lieu l'insertion de la deuxième gomme. On préserve donc le positionnement de cette dernière au sein de la nappe et la forme de celle-ci.

De préférence, l'installation comprend en amont de l'entrefer une étrave contigüe à l'un des rouleaux et indépendante des deuxièmes moyens d'alimentation en gomme. En raison de cette indépendance, on peut positionner l'étrave à l'endroit le plus approprié.

Avantageusement, l'installation comprend un organe apte à détecter qu'une couche de gomme forme deux parties disjointes en aval de l'étrave et en amont de l'entrefer. Ainsi, on s'assure que la fente est convenablement réalisée et donc apte à recevoir l'insert dans de bonnes conditions. On s'assure aussi si besoin que l'insert sera visible sur une des faces de la nappe au moins.

De préférence, les deuxièmes moyens d'alimentation comprennent une buse d'extrusion.

Avantageusement, la buse porte une étrave.

Lorsque l'étrave amont précitée est absente, l'étrave de la buse permet la réalisation de la fente pour la réception de l'insert. A l'inverse, lorsque l'étrave amont est présente, l'étrave de la buse, en redondance, évite à la fente de se refermer.

On peut prévoir que la buse présente un orifice débouchant en direction de l'entrefer.

De préférence, la buse présente un orifice débouchant en direction d'au moins l'un des rouleaux suivant une orientation radiale à un axe de rotation du rouleau. Ainsi, on favorise la réalisation d'un insert apparaissant sur au moins une face principale de la nappe, voire sur chacune d'elles.

De préférence, la buse comporte un corps et une bouche formant un orifice de sortie de la gomme et s'étendant en saillie d'une face latérale du corps, de préférence de part et d'autre de ce dernier. Ainsi, le corps de la buse n'interfère pas avec la gomme alimentée par les premiers moyens.

De préférence, la buse s'étend tout entière à distance très faible de l'entrefer sans entrer en contact avec l'un des rouleaux.

De préférence, l'installation comprend un organe apte à détecter un courant électrique traversant une épaisseur de la nappe. On vérifie ainsi que la deuxième gomme, le cas échéant, est bien apte à permettre l'évacuation des charges électriques à travers la nappe.

De préférence, l'installation comprend au moins un organe apte à détecter une différence de couleurs entre des portions d'une face de la nappe. C'est donc cette fois un contrôle optique qui permet de garantir que l'insert apparaît sur au moins une des faces.

Ces deux organes, qui peuvent être prévus en redondance, permettent chacun de vérifier le positionnement correct de l'insert dans la nappe une fois celle-ci formée.

D'autres caractéristiques et avantages de l'invention apparaîtront encore dans la description suivante d'un mode de réalisation donné à titre d'exemple non limitatif en référence aux dessins annexés sur lesquels :
- la figure 1 est une vue en coupe verticale d'une installation selon l'invention, la coupe étant réalisée dans un plan perpendiculaire à l'axe de rotation des rouleaux de la calandre ;
- les figures 2 et 3 sont des vues en perspective respectivement de l'avant et de l'arrière de l'installation de la figure 1 ;
- les figures 4 et 5 sont des vues en perspective respectivement de l'étrave amont et de la buse de l'installation de la figure 1 ;
- les figures 6 à 11 sont des vues en section dans un plan perpendiculaire à la direction longitudinale de la nappe, montrant six exemples respectifs de réalisation de cette dernière ; et
- les figures 12 et 13 sont deux vues montrant respectivement une ébauche crue et un pneumatique obtenus au moyen du procédé de l'invention.

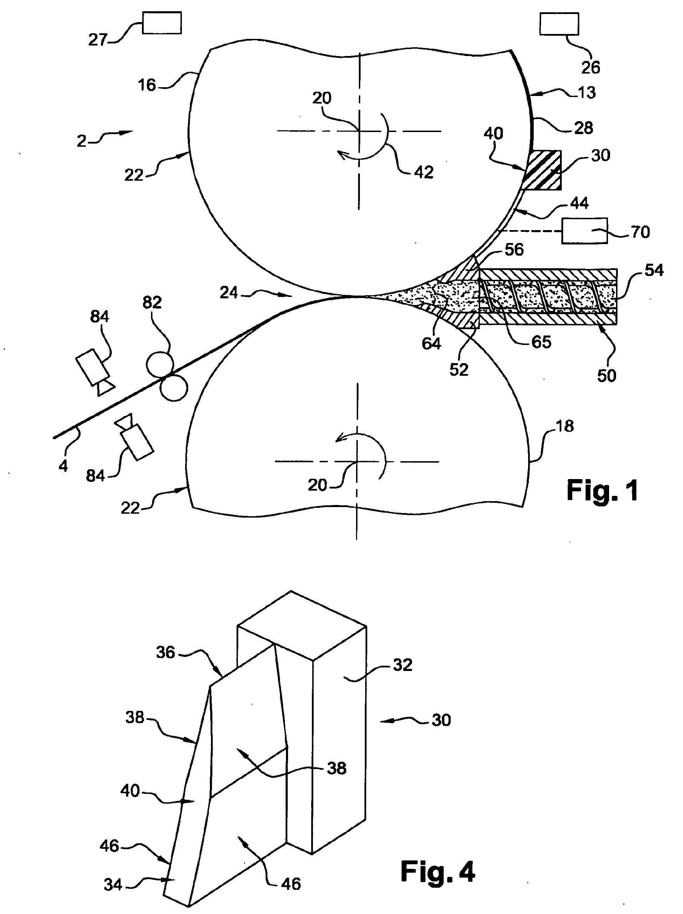

On a illustré aux figures 1 à 5 une installation pour la réalisation de pneumatiques de roues et servant plus précisément à la réalisation d'une ébauche crue du pneumatique.

Le pneumatique est par exemple un pneumatique de roue de véhicule de tourisme, de véhicule léger, de véhicule utilitaire, de véhicule de type poids lourd ou encore de roue d'un engin de génie civil.

L'installation 2 permet la réalisation d'une nappe 4 ou skim destinée à former par enroulement l'ébauche crue d'une bande de roulement.

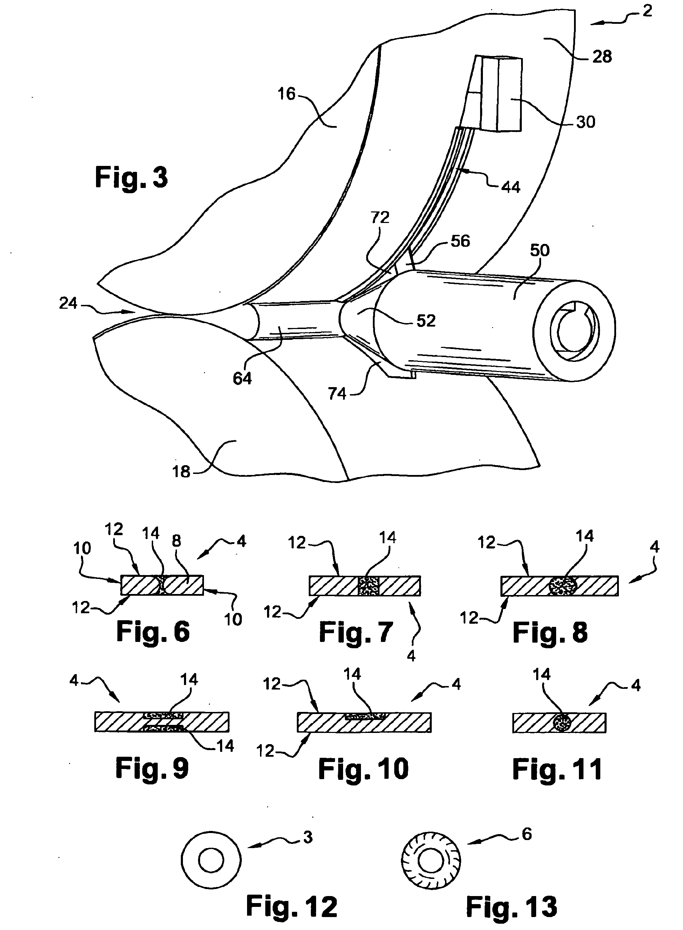

On suppose tout d'abord que l'installation 2 est destinée à réaliser la nappe 4 en lui donnant une section transversale dans un plan perpendiculaire à sa direction longitudinale qui est celle illustrée à la figure 6. La nappe a une forme profilée de sorte que sa section se reproduit à l'identique le long de la nappe.

La nappe 4 comprend un corps principal 8 réalisé dans une première gomme et formant notamment l'intégralité des deux bords latéraux 10 de la nappe ainsi que la plus grande partie de ses faces principales supérieure et inférieure 12.

La nappe comprend en outre un insert 14 formé par un filet réalisé dans une deuxième gomme, généralement conductrice de l'électricité. L'insert s'étend dans la nappe suivant la direction longitudinale de cette dernière et suivant un axe rectiligne. En l'espèce, l'insert s'étend à mi distance des bords latéraux 10. L'insert et la nappe sont tous deux à symétrie centrale, le centre de symétrie se trouvant sur la fibre moyenne de la nappe. On comprendra néanmoins que cette forme de réalisation n'est pas obligatoire, et que l'insert peut se situer axialement à un endroit quelconque de la nappe pour autant que sa position soit constante de manière à permettre la superposition des couches de gomme conductrice de l'électricité à chaque enroulement.

L'insert a, en l'espèce, une forme de diabolo ou forme renflée de sorte que la largeur de l'insert présente son minimum au centre de la nappe. L'insert 14 est ici visible sur les deux faces principales 12 de la nappe qu'il constitue partiellement. Il s'étend continûment de l'une à l'autre de celle-ci suivant l'épaisseur de la nappe.

La nappe 4 présente par exemple une épaisseur comprise entre 0,5 et 2 mm. La largeur totale de l'insert est comprise par exemple entre 1 et 10 mm. Les première et deuxième gommes sont formées chacune par un mélange comprenant du caoutchouc naturel, du caoutchouc synthétique, de l'huile et différents adjuvants. En l'espèce, les deux mélanges diffèrent au moins par le fait que la première gomme comprend une charge renforçante en silice, charge qui est absente de la deuxième gomme ou à tout le moins en proportion bien moins élevée dans cette dernière que dans la première. La première gomme est donc beaucoup moins bonne conductrice de l'électricité que la deuxième.

Nous allons maintenant décrire l'installation 2. Cette dernière comprend une calandre 13 comprenant plusieurs rouleaux ou cylindres parmi lesquels deux rouleaux respectivement supérieur 16 et inférieur 18 qui ont été illustrés sur les figures. La calandre comprend d'autres rouleaux assurant l'alimentation de la calandre en gomme mais ceux-ci n'ont pas été illustrés.

Les deux rouleaux 16 et 18 constituent les rouleaux de la calandre situés les plus en aval par référence au sens de défilement de la gomme et de la nappe dans l'installation. Ils présentent des axes de rotation horizontaux parallèles 10 et des faces externes cylindriques 22 à section circulaire dans un plan perpendiculaire à l'axe 10. Les deux rouleaux sont en l'espèce identiques l'un à l'autre et disposés avec leurs faces 22 en regard l'une de l'autre de façon à former entre eux un entrefer 24 à l'endroit où la distance entre les deux rouleaux est minimale. Les rouleaux 16 et 18 tournent en sens contraires l'un de l'autre.

L'installation 2 est agencée de sorte que la distance séparant les deux axes 20 est réglable, de même par conséquent que la hauteur de l'entrefer 24, ce qui permet de choisir l'épaisseur que l'on souhaite donner à la nappe 4. On prévoit en l'espèce que l'axe 20 du rouleau supérieur 14 est monté fixe à coulissement sur un bâti 27 de la machine tandis que celui de l'autre rouleau 18 est monté mobile à coulissement vertical par rapport au bâti pour permettre ce réglage.

L'installation 2 comporte des moyens 26 qui n'ont pas été illustrés en détail, comprenant par exemple un ou plusieurs rouleaux et destinés à permettre l'alimentation du rouleau 16 avec la première gomme. En l'espèce, cette alimentation est réalisée de sorte que la première gomme est amenée jusqu'à l'entrefer 24 par le seul premier rouleau 16 sous la forme d'une couche 28 appliquée contre la face 22, d'épaisseur et de largeur constante.

L'installation 2 comprend dans le présent exemple une étrave 30 représentée en particulier à la figure 4. L'étrave est reliée au bâti de l'installation par des moyens non représentés qui permettent de donner à l'étrave une position fixe par rapport au bâti. Ces moyens permettent néanmoins de régler cette position en fonction des particularités de la fabrication. L'étrave 30 comprend un corps 32 par l'intermédiaire duquel elle est reliée au bâti.

Elle comprend par ailleurs une lame 34 présentant une arête tranchante supérieure rectiligne horizontale 36 radiale à l'axe 20. Cette arête est définie par l'intersection de deux faces supérieures planes 38 de la lame. La lame 34 présente une face avant cylindrique concave 40 ayant un rayon de courbure égal à celui de la face convexe 22 du rouleau supérieur 16. L'étrave est en appui contre le rouleau suivant une direction radiale à l'axe 20 de sorte que la face 40 vient en contact surfacique avec la face 22, les faces étant concentriques.

On prévoit avantageusement que les moyens de liaison de l'étrave au bâti permettent de régler l'intensité de la pression associée à cet appui. L'étrave est réalisée dans une matière plastique ou un métal et est configurée de préférence de sorte que la face 40 peut se déformer légèrement pour épouser convenablement la face 22. L'étrave étant maintenue dans une position fixe par rapport au bâti lors de la rotation du rouleau 16 comme indiqué par la flèche 42, elle frotte légèrement la surface du rouleau.

En fonctionnement, la lame de l'étrave 30 fend la couche de gomme 28 pour y réaliser un sillon 44, traversant toute l'épaisseur de cette dernière suivant la direction radiale à l'axe 20. La partie amont de la lame a un profil en « V » dans un plan tangent à la face 22 afin de donner une configuration symétrique aux bords du sillon 44. Les faces 38 de la lame inclinées l'une par rapport à l'autre sont prolongées par des faces planes 46 parallèles l'une à l'autre et permettant d'éviter que le sillon ne se referme après que la couche 28 a franchit l'étrave amont 30. La largeur du sillon est égale à celle de la lame. La lame 34 présente suivant la direction radiale à l'axe 20 une dimension suffisante pour que corps 32 ne soit pas en contact avec la couche 28.

En aval de l'étrave 30, la face 22 du rouleau est visible au fond du sillon et y est exempte de toute trace de la première gomme de sorte que la couche est parfaitement fendue en deux parties distinctes. Cela résulte du fait que l'étrave frotte contre la surface du rouleau 22. Comme on le verra plus loin, on peut ainsi, disposer dans le sillon 44 l'insert14 dans une configuration symétrique et de sorte qu'il apparaisse sur les deux faces principales de la nappe.

L'installation 2 comprend un outil d'extrusion 50 portant à son extrémité aval une buse 52 alimentée par l'outil avec la deuxième gomme. L'outil 50 comprend notamment une vis de pression 54 s'étendant suivant un axe qui est également son axe de rotation. Dans le cas servant de support à la présente description, cet axe est, en l'espèce, horizontal et passe géométriquement par l'entrefer 24, mais tout autre arrangement est aussi possible.

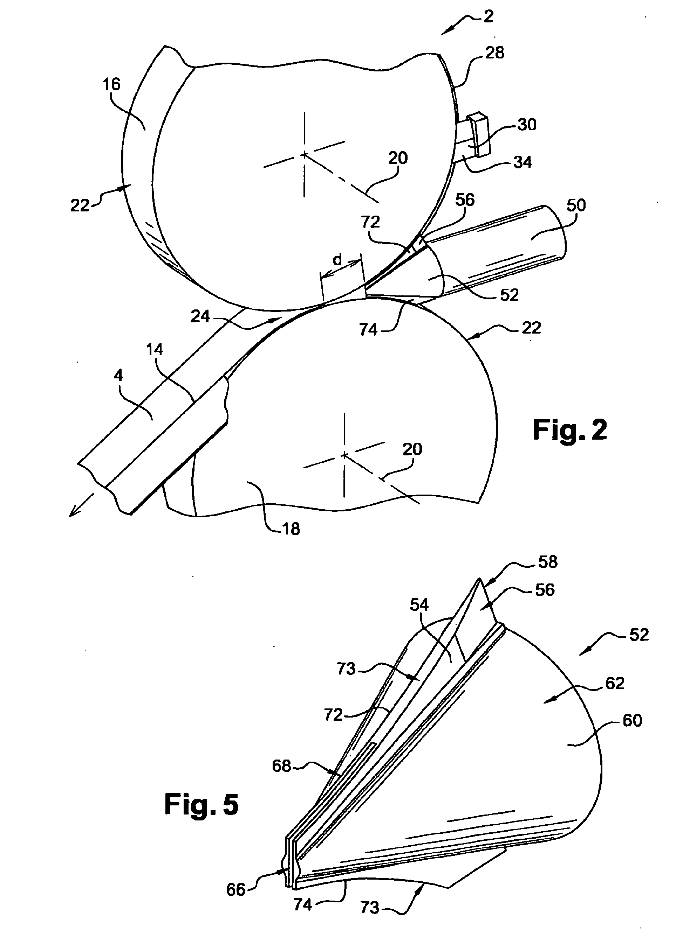

La buse 52, illustrée notamment à la figure 5, comprend elle aussi dans le présent exemple une étrave 54 portant une lame amont 56. La buse comprend un corps 60 qui présente une face externe 62, en l'espèce de forme conique coaxiale à la vis 54. L'étrave 54 s'étend en saillie de la face 60 suivant la direction radiale à l'axe du rouleau 14.

L'étrave a une forme analogue à celle de la lame 34 de l'étrave 30. Elle présente ainsi une arête tranchante rectiligne 58 radiale à l'axe 20 et définie par deux faces inclinées. Sachant que l'étrave 54 s'étend en aval de l'étrave 30, leurs deux bords tranchant radiaux à l'axe 20 ne sont pas parallèles l'un à l'autre. En l'espèce, l'étrave aval 54 présente une largeur suivant la direction de l'axe 20, ici de 2,5 millimètres, inférieure à celle de la lame amont 34. En effet, sa fonction n'est pas de réaliser un sillon mais seulement de maintenir convenablement ouvert le sillon 44. Les deux lames s'étendent à cette fin dans le même plan.

La buse 52 a pour fonction d'injecter la deuxième gomme dans l'entrefer et dans un bourrelet 64 formé par la première gomme en amont de l'entrefer 24 au contact des rouleaux. Elle présente une cavité interne 65 mettant en communication l'extrémité aval de l'outil d'extrusion 50 avec un orifice 66 de la buse. Cet orifice est défini en l'espèce par une bouche d'extrusion 68 formée par deux reliefs 72 et 74 s'étendant en saillie de la face 62 du corps, de part et d'autre de l'axe de ce dernier.

Chacun des reliefs s'étend de façon rectiligne le long d'une génératrice du cône, les deux reliefs étant diamétralement opposés de part et d'autre de l'axe du cône. Le relief supérieur 72 définit non seulement une partie de l'orifice 66 mais aussi l'étrave 54. Les deux reliefs 72, 74 présentent sur leurs faces longitudinales d'extrémité libre une fente rectiligne définissant l'orifice 66.

L'extrémité avant de la buse est formée par un pan coupé vertical formant l'extrémité des reliefs 72 et 74 et entamant la pointe du cône. Les deux fentes se rejoignent à cette extrémité où l'orifice s'étend dans une configuration verticale rectiligne. L'orifice 66 est donc formé continûment en trois parties, à savoir une partie verticale rectiligne à l'avant de la buse et deux parties allongées situées respectivement au-dessus et au-dessous de la buse. L'orifice 66 débouche donc à la fois en direction de l'entrefer 24 et, indépendamment de cela, sur les deux reliefs, en direction de chacun de rouleaux suivant une orientation radiale à l'axe 20 du rouleau correspondant. La largeur de l'orifice 66 dépend de la largeur et de la forme que l'on souhaite donner à l'insert14. Elle est par exemple de 1 millimètre.

Tout comme la face avant 40 de l'étrave 30, les faces d'extrémité 73 des reliefs 72 et 74 sont destinées à venir en appui surfacique contre les faces 22 des rouleaux 16 et 18 respectifs avec lesquelles elles sont concentriques. Elles ont donc une forme concave cylindrique permettant un contact surfacique avec la face 22 correspondante. On prévoit un jeu faible entre ces faces et les rouleaux. En l'espèce, ce jeu est de 0,1 millimètre entre le relief supérieur 72 et le rouleau supérieur 16, et le jeu du relief inférieur 74 avec le rouleau inférieur 18 est prévu pour être variable, par exemple de 1 millimètre, sachant que la hauteur de l'entrefer 24 l'est aussi.

La deuxième gomme est amenée par l'outil d'extrusion 50 dans la cavité 65 de la buse 52 et en sort par les parties supérieure, inférieure et avant de l'orifice 66. Ainsi, elle entre en contact avec les rouleaux 16 et 18 avant même de pénétrer dans le bourrelet 64, ce qui permet de former un filet continu de la deuxième gomme dans toute l'épaisseur de la première gomme.

La buse 52 s'étend tout entière à distance de l'entrefer 24. La distance d entre ces deux éléments, illustrée à la figure 2, a deux fonctions. La première est d'assurer la cohésion du mélange formant la première gomme avec le mélange formant la deuxième gomme grâce à la pression générée dans le bourrelet 64. La deuxième est de permettre à ce bourrelet de se refermer en vue de l'obtention d'une nappe 4 plate et calibrée en épaisseur lorsqu'on interrompt l'injection de la deuxième gomme tout en continuant la fabrication de la nappe avec l'alimentation de la première gomme.

Grâce au fait que l'orifice 66 est défini par une bouche s'étendant en saillie de la face 62, la buse présente une surface de contact minimale avec le bourrelet 64 et ne présente aucune partie susceptible de provoquer des rétentions de deuxième gomme. On évite ainsi des problèmes d'adhésion et de rétention de la deuxième gomme sur la buse.

En variante, on peut revêtir la face externe 62 de la buse au moyen d'un matériau anti-adhésif ou encore d'un matériau favorisant le glissement de la deuxième gomme sur la buse.

On peut prévoir que l'étrave 30 et la buse 52 sont régulées thermiquement et dotées par exemple de moyens de chauffage permettant de chauffer la gomme pour la maintenir à une température favorisant la réalisation de la nappe.

Lors de la fabrication, la buse réalise donc l'insertion de la deuxième gomme dans le sillon 44 formé au sein de la première. La fabrication a lieu en continu de sorte que les deux gommes sont amenées en continu et simultanément jusqu'à l'entrefer.

Au cours du passage entre les rouleaux 16 et 18, les deux gommes sont conformées dans l'entrefer pour donner sa forme à la nappe 4 en sortie de la calandre. La fabrication peut se faire à différentes vitesses. La nappe 4 peut être produite par exemple à une vitesse comprise entre 5 et 80 mètres par minute ou davantage.

L'installation comprend des moyens de commande aptes notamment à synchroniser le débit de la deuxième gomme fourni à la calandre en fonction de la vitesse d'alimentation de la première gomme et de la vitesse de sortie de la nappe.

En variante, on peut se dispenser de prévoir l'étrave amont 30 de sorte que la création du sillon est assurée par l'étrave 54 de la buse 52. Il est alors préférable que cette dernière soit en contact avec le rouleau 16, et appliquée contre sa face 22 avec un effort suffisant.

On a illustré aux figures 7 à 11 différentes configurations de la nappe 4 et du ou des inserts 14 qu'elle comporte. Dans la suite, les profils indiqués sont, comme précédemment, des profils dans un plan transversal perpendiculaire à une direction longitudinale de la nappe.

Ainsi, à la figure 7, l'insert 14 a un profil rectangulaire, en l'espèce carré, deux des faces du rectangle étant confondues avec les faces 12 de la nappe.

Sur la figure 8, l'insert 14 a un profil ovale ou elliptique, le grand axe de l'ellipse étant parallèle aux faces 12 et situé à mi-distance de celles-ci. La section du filet est tangente aux deux faces principales 12.

Sur la figure 9, ce n'est pas un mais deux inserts 14 qui sont mis en place dans le premier matériau de la nappe. Chaque insert a en l'espèce un profil rectangulaire. L'une des faces du rectangle est confondue avec une face 12 respective. Ainsi, les inserts apparaissent chacun sur une des faces 12 respectives de la nappe. Les deux inserts ne sont toutefois pas en contact l'un avec l'autre de sorte qu'ils s'étendent à distance l'un de l'autre.

Dans la nappe de la figure 10, un seul insert est prévu qui apparaît sur une seule face principale 12 de la nappe. L'autre face est intégralement définie par la première gomme. L'insert a, par exemple, un profil de forme rectangulaire.

Dans le mode de réalisation de la figure 9, l'insert a une section de forme circulaire, le cercle étant tangent aux deux faces principales 12.

Dans les modes de réalisation des figures 6, 7, 8, 10 et 11, c'est donc un unique insert qui est prévu au sein de la nappe. L'insert unique apparaît sur chacune des deux faces dans les modes de réalisation des figures 6, 7, 8 et 11. Le ou chaque insert apparaît seulement sur une des deux faces dans les modes de réalisation des figures 9 et 10. Ainsi, les modes de réalisation des figures 6 à 8 sont dits à insert traversant, et ceux des figures 9 à 11 sont dits à insert non traversant. Dans tous ces modes de réalisation, le ou chaque insert s'étend intégralement à distance des bords latéraux 10.

On peut doter l'installation d'organes permettant de vérifier que l'insert est traversant ou visible sur une des deux faces de la nappe. Chacun de ces organes permet d'effectuer un contrôle en continu durant la fabrication.

Ainsi, l'installation 2 comprend en l'espèce un détecteur optique 70 positionné en aval de l'étrave 30 et en amont de la buse 52. Il présente un organe optique dirigé vers le rouleau 22 suivant une direction radiale dans le sillon 44 afin de vérifier que le rouleau est exempt de toute trace de gomme en fond de sillon. Ce détecteur permet par exemple d'assurer que la deuxième gomme sera convenablement visible sur la face supérieure de la nappe en sortie de calandre.

L'installation comprend également un dispositif de contrôle 72 situé en aval des rouleaux 16 et 18. Ce dispositif est doté de deux roulettes présentant des axes de rotation parallèles aux axes 20 et en contact avec les faces 12 respectives de la nappe. Ce dispositif est apte à mesurer une résistance électrique de la nappe, par exemple de l'insert14 lorsqu'il est en configuration traversante, en faisant passer un courant électrique dans la nappe suivant son épaisseur. Le dispositif permet par exemple de vérifier le cas échéant que l'insert s'étend dans toute l'épaisseur d'une même section de la nappe.

L'installation 2 comprend en outre deux caméras vidéos 74, dirigées vers les faces principales respectives de la nappe, en aval de la calandre, en l'espèce en aval du détecteur 72. Chacune de ces caméras est apte à détecter une différence de teinte ou de couleur entre deux zones différentes de la face 12 qu'elle observe. Ce détecteur est utile lorsque le filet apparaît sur la face avec une différence de teinte par rapport au reste de la face. Il permet ainsi de vérifier que le filet apparaît convenablement sur la face en question.

La nappe 4 est destinée à être enroulée sur l'ébauche 3 du pneumatique en cours de réalisation, illustrée à la figure 12, en plusieurs tours de façon à former plusieurs couches de nappe disposées les unes à côté des autres et/ou les unes au-dessus des autres. Ces couches sont tantôt juxtaposées, tantôt en superposition partielle, tantôt en superposition totale. On réalise ainsi une partie au moins de la bande de roulement du pneumatique 6 destinée à être en contact avec le sol lors du roulage du véhicule. La superposition de la nappe assure la mise en contact de l'insert avec lui-même dans les différents tronçons qui se succèdent en direction radiale par référence à l'axe principal du pneumatique. Ce contact permettra une évacuation des charges électriques suivant la même direction.

L'ébauche crue fait ensuite notamment l'objet d'une étape de cuisson pour la vulcanisation de la gomme et l'obtention du pneumatique.

L'invention peut être mise en oeuvre pour former une partie seulement de la bande de roulement, cette partie pouvant être une partie interne, le contact électrique entre cette partie et la face externe du pneumatique étant assuré par d'autres moyens. L'invention peut aussi servir à réaliser une partie externe de la bande de roulement.

Cette installation et le procédé de réalisation qu'elle met en oeuvre sont particulièrement avantageux lorsque la deuxième gomme est meilleure conductrice de l'électricité que la première en étant pas ou peu chargée en silice à la différence de cette dernière. L'invention peut néanmoins être mise en oeuvre lorsque les deux gommes ont des formulations différentes mais ne présentent pas pour autant de différences sensibles de conductivité électrique.

Bien entendu, on pourra apporter à l'invention de nombreuses modifications sans sortir du cadre de de l'invention définie par les revendications.

## Revendications

1. Procédé de fabrication d'une ébauche crue (3) de pneumatique (6), dans lequel simultanément :
- une calandre (13) forme dans un entrefer (24) situé entre deux rouleaux (16, 18) une nappe (4) comprenant une première gomme (28), la calandre formant un bourrelet (64) en amont de l'entrefer, et
- on alimente le bourrelet et l'entrefer avec une deuxième gomme présentant une composition différente de celle de la première gomme, de façon à former dans la nappe au moins un insert (14) de la deuxième gomme.

2. Procédé selon la revendication précédente, dans lequel l'un (16) des deux rouleaux porte la première gomme en amont de l'entrefer.

3. Procédé selon au moins l'une quelconque des revendications précédentes, dans lequel, en amont de l'entrefer, on sépare en deux parties disjointes une couche (28) de la première gomme.

4. Procédé selon au moins l'une quelconque des revendications précédentes, dans lequel on réalise l'alimentation de la deuxième gomme par extrusion.

5. Procédé selon au moins l'une quelconque des revendications précédentes, dans lequel on met en oeuvre le procédé de sorte que l'insert (14) ou l'un des inserts apparaît sur au moins une face principale (12) de la nappe, de préférence sur les deux faces principales de la nappe dans une même section de la nappe dans un plan perpendiculaire à une direction longitudinale de la nappe.

6. Procédé selon au moins l'une quelconque des revendications précédentes, dans lequel la résistivité de la première gomme est supérieure ou égale à 10⁸ Ohms/cm, et dans laquelle la résistivité de la deuxième gomme est inférieure ou égale à 10⁶ Ohms/cm.

7. Installation (2) de fabrication d'une ébauche crue de pneumatique (6), comprenant :
- une calandre (13) comportant au moins deux rouleaux (16, 18) formant un entrefer (26),
- des premiers moyens (16) d'alimentation de l'entrefer en gomme, agencés de sorte que l'entrefer forme une nappe de gomme et que la calandre forme un bourrelet (64) en amont de l'entrefer,
et **caractérisée en ce que** ladite installation comprend
- des deuxièmes moyens d'alimentation (50, 52) de l'entrefer et du bourrelet en gomme, indépendants des premiers moyens et agencés de façon à former au moins un insert (14) dans la nappe.

8. Installation selon la revendication précédente, dans laquelle la calandre (13) comprend au moins trois rouleaux, les deux rouleaux (16, 18) formant l'entrefer étant les rouleaux les plus en aval.

9. Installation selon au moins l'une quelconque des revendications 7 et 8 qui comprend en amont de l'entrefer une étrave (30) contiguë à l'un (16) des rouleaux et indépendante des deuxièmes moyens d'alimentation en gomme.

10. Installation selon au moins l'une quelconque des revendications 7 à 9, dans laquelle les deuxièmes moyens d'alimentation comprennent une buse d'extrusion (52).

11. Installation selon la revendication précédente, dans laquelle la buse porte une étrave (56).

12. Installation selon au moins l'une quelconque des revendications 10 à 11, dans laquelle la buse présente un orifice (66) débouchant en direction de l'entrefer.

13. Installation selon au moins l'une quelconque des revendications 10 à 12, dans laquelle la buse présente un orifice (66) débouchant en direction d'au moins l'un des rouleaux (16, 18) suivant une orientation radiale à un axe de rotation (20) du rouleau.

14. Installation selon au moins l'une quelconque des revendications 10 à 13, dans laquelle la buse comporte un corps (60) et une bouche (68) formant un orifice (66) de sortie de la gomme et s'étendant en saillie d'une face latérale (62) du corps, de préférence de part et d'autre de ce dernier.

15. Installation selon au moins l'une quelconque des revendications 10 à 14, dans laquelle la buse (52) s'étend tout entière à distance de l'entrefer (24).

## Patentansprüche

1. Verfahren zur Herstellung eines Rohlings (3) eines Reifens (6), bei welchem gleichzeitig:
- ein Kalander (13) in einem zwischen zwei Walzen (16, 18) befindlichen Spalt (24) eine Lage (4) formt, die einen ersten Gummi (28) aufweist, wobei der Kalander vor dem Spalt einen Wulst (64) bildet, und
- dem Wulst und dem Spalt ein zweiter Gummi zugeführt wird, der eine Zusammensetzung aufweist, die von derjenigen des ersten Gummis verschieden ist, derart, dass in der Lage wenigstens eine Einlage (14) des zweiten Gummis gebildet wird.

2. Verfahren nach dem vorhergehenden Anspruch, wobei die eine (16) der beiden Walzen vor dem Spalt den ersten Gummi trägt.

3. Verfahren nach mindestens einem der vorhergehenden Ansprüche, wobei vor dem Spalt eine Schicht (28) des ersten Gummis in zwei getrennte Teile aufgeteilt wird.

4. Verfahren nach mindestens einem der vorhergehenden Ansprüche, wobei die Zuführung des zweiten Gummis durch Strangpressen erfolgt.

5. Verfahren nach mindestens einem der vorhergehenden Ansprüche, wobei das Verfahren derart durchgeführt wird, dass die Einlage (14) oder eine der Einlagen auf wenigstens einer Hauptseite (12) der Lage, vorzugsweise auf den beiden Hauptseiten der Lage in ein und demselben Schnitt der Lage in einer zu einer Längsrichtung der Lage senkrechten Richtung erscheint.

6. Verfahren nach mindestens einem der vorhergehenden Ansprüche, wobei der spezifische Widerstand des ersten Gummis größer oder gleich 10⁸ Ohm/cm ist, und wobei der spezifische Widerstand des zweiten Gummis kleiner oder gleich 10⁶ Ohm/cm ist.

7. Anlage (2) zur Herstellung eines Rohlings eines Reifens (6), welche aufweist:
- einen Kalander (13), welcher wenigstens zwei Walzen (16, 18) aufweist, die einen Spalt (26) bilden,
- erste Mittel (16) zur Zuführung von Gummi zu dem Spalt, die derart angeordnet sind, dass der Spalt eine Gummilage formt und dass der Kalander einen Wulst (64) vor dem Spalt formt,
und **dadurch gekennzeichnet ist, dass** die Anlage aufweist:
- zweite Mittel (50, 52) zur Zuführung von Gummi zu dem Spalt und dem Wulst, die unabhängig von den ersten Mitteln sind und dafür eingerichtet sind, wenigstens eine Einlage (14) in der Lage zu bilden.

8. Anlage nach dem vorhergehenden Anspruch, wobei der Kalander (13) wenigstens drei Walzen aufweist, wobei die zwei Walzen (16, 18), die den Spalt bilden, die in Förderrichtung zuletzt angeordneten Walzen sind.

9. Anlage nach wenigstens einem der Ansprüche 7 und 8, welche vor dem Spalt einen Spaltkeil (30) aufweist, der an eine (16) der Walzen angrenzt und unabhängig von den zweiten Mitteln zur Zuführung von Gummi ist.

10. Anlage nach wenigstens einem der Ansprüche 7 bis 9, wobei die zweiten Mittel zur Zuführung eine Extrusionsdüse (52) aufweisen.

11. Anlage nach dem vorhergehenden Anspruch, wobei die Düse einen Spaltkeil (56) trägt.

12. Anlage nach wenigstens einem der Ansprüche 10 bis 11, wobei die Düse eine Öffnung (66) aufweist, die in Richtung des Spalts mündet.

13. Anlage nach wenigstens einem der Ansprüche 10 bis 12, wobei die Düse eine Öffnung (66) aufweist, die in Richtung wenigstens einer der Walzen (16, 18) mit einer in Bezug auf eine Drehachse (20) der Walze radialen Ausrichtung mündet.

14. Anlage nach wenigstens einem der Ansprüche 10 bis 13, wobei die Düse einen Körper (60) und einen Düsenmund (68) aufweist, der eine Austrittsöffnung (66) für den Gummi bildet und sich von einer Seitenfläche (62) des Körpers aus, vorzugsweise beiderseits dieses Letzteren, vorstehend erstreckt.

15. Anlage nach wenigstens einem der Ansprüche 10 bis 14, wobei sich die Düse (52) vollständig in einem Abstand von dem Spalt (24) erstreckt.

## Claims

1. Method for manufacturing a raw blank (3) of a tyre (6), in which simultaneously:
- a calender (13) forms, in a gap (24) situated between two rollers (16, 18), a ply (4) comprising a first rubber (28), the calender forming a bead (64) upstream of the gap, and
- the bead and the gap are fed with a second rubber having a different compound from that of the first rubber, so as to form, in the ply, at least one insert (14) of the second rubber.

2. Method according to the preceding claim, in which one roller (16) of the two rollers supports the first rubber upstream of the gap.

3. Method according to at least any one of the preceding claims, wherein, upstream of the gap, a layer (28) of the first rubber is separated into two disjointed portions.

4. Method according to at least any one of the preceding claims, in which the feeding of the second rubber is carried out by extrusion.

5. Method according to at least any one of the preceding claims, in which the method is applied such that the insert (14) or one of the inserts appears on at least one main face (12) of the ply, preferably on the two main faces of the ply in one and the same section of the ply in a plane perpendicular to a longitudinal direction of the ply.

6. Method according to at least any one of the preceding claims, in which the resistivity of the first rubber is greater than or equal to 10⁸ ohms/cm and in which the resistivity of the second rubber is less than or equal to 10⁶ ohms/cm.

7. Installation (2) for manufacturing a raw blank of a tyre (6) comprising:
- a calender (13) comprising at least two rollers (16, 18) forming a gap (26),
- first means (16) for feeding the gap with rubber, which means being arranged such that the gap forms a rubber ply and that the calender forms a bead (68) upstream of the gap,
and **characterised in that** said installation comprises
- second means (50, 52) for feeding the gap and the bead with rubber, which means being independent of the first means and arranged so as to form at least one insert (14) in the ply.

8. Installation according to the preceding claim, in which the calender (13) comprises at least three rollers, the two rollers (16, 18) forming the gap being the rollers furthest downstream.

9. Installation according to at least any one of Claims 7 and 8, which comprises upstream of the gap a forestem (30) contiguous with one (16) of the rollers and independent of the second rubber-feeding means.

10. Installation according to at least any one of Claims 7 to 9, in which the second feeding means comprise an extrusion nozzle (52).

11. Installation according to the preceding claim, in which the nozzle supports a forestem (56).

12. Installation according to at least any one of Claims 10 and 11, in which the nozzle has an orifice (66) opening in the direction of the gap.

13. Installation according to at least any one of Claims 10 to 12, in which the nozzle has an orifice (66) opening in the direction of at least one of the rollers (16, 18) in an orientation radial to a rotation axis (20) of the roller.

14. Installation according to at least any one of Claims 10 to 13, in which the nozzle comprises a body (60) and a mouth (68) forming an outlet orifice (66) for the rubber and extending in protrusion from a lateral face (62) of the body, preferably on either side of the latter.

15. Installation according to at least any one of Claims 10 to 14, in which the nozzle (52) extends entirely at a distance from the gap (24).
